# FASCICULE DE BREVET EUROPEEN

(11) **EP 1 137 613 B1**
(45) Date de publication et mention de la délivrance du brevet: **11.06.2003**
(21) Numéro de dépôt: 99956137.6
(22) Date de dépôt: 24.11.1999
(51) Int. Cl.: C04B 41/48

(54) **PROCEDE DE TRAITEMENT D'UN MATERIAU A BASE DE BETON, MORTIER ET ANALOGUES**
VERFAHREN ZUR BEHANDLUNG EINES WERKSTOFFS AUF DER BASIS VON BETON, MÖRTEL UND DERGLEICHEN
METHOD FOR TREATING A MATERIAL BASED ON CONCRETE, MORTAR OR THE LIKE

(30) Priorité: 25.11.1998 FR 9814855
(43) Date de publication de la demande: 04.10.2001
(73) Titulaire: SPIE BATIGNOLLES T.P., 95863 Cergy Pontoise Cedex (FR); MFP SA, 1204 Genève (CH); Domtar Inc., Montreal, Quebec H3A 1L6 (CA)
(72) Inventeur: MALRIC, Bernard, F-01220 Divonne-les-Bains (FR); COLLOUD, Olivier, F-74410 Duingt (FR); LUTZ, Théophile, CH-1110 Morges (CH)
(74) Mandataire: Keib, Gérard
(86) Numéro de dépôt international: FR9902898
(87) Numéro de publication internationale: WO00031001

(56) Documents cités:
- WO-A-97/22564
- DE-C- 498 588
- US-A- 5 556 915

## Description

L'invention se rapporte à un procédé pour le traitement d'un matériau à base de béton, ciment, mortier ou similaire, ou à base d'autres matériaux utilisés en construction tels que la pierre ou le stuc qui peuvent dans certains cas, être armés ou assemblés avec des éléments métalliques.

Elle se rapporte notamment à un procédé de diffusion profonde de produits actifs à l'intérieur d'un matériau à base de béton, ciment, mortier, pierre, stuc ou similaire.

Elle se rapporte enfin à un vecteur pour la diffusion de produits actifs dans un matériau à base de béton, ciment, mortier ou similaire, ou de matériaux à base de pierre ou stuc.

Il est de pratique courante d'ajouter à un matériau tel qu'un béton, un ou plusieurs produits actifs, en vue d'une action particulière sur le béton, le mortier ou la pierre en vue par exemple de protéger les armatures incluses.

Ce ou ces produits actifs peuvent être incorporés dans le béton, en tant qu'additifs, lors de l'opération de coulage ou pendant le temps de prise du béton.

Il peut être également nécessaire de faire diffuser des produits actifs de diverses natures dans un matériau à base de béton, ciment, mortier ou similaire, plusieurs années après sa prise.

Il peut s'agir par exemple de vernis, de produits de nettoyage, de composés permettant de réaliser un traitement spécifique du matériau, par exemple en vue de le renforcer, de l'enrichir en certains éléments ou de combattre certains défauts ou l'effet d'agents chimiques ayant éventuellement diffusé dans le béton au fur et à mesure de son vieillissement.

De tels produits de traitement sont par exemple utilisés pour les bétons, pour limiter la corrosion apparaissant sur les armatures.

Les bétons ont en effet longtemps été considérés comme un matériau durable, dont les armatures étaient protégées de la corrosion par le pH élevé du milieu.

On constate cependant aujourd'hui que la plus grande partie des dommages constatés sur les ouvrages en béton provient de la corrosion des armatures, dont la protection peut être détruite soit par la baisse du pH, soit par l'arrivée d'éléments chimiques agressifs tels que les ions chlorures par exemple, soit par un effet combiné de ces deux facteurs.

La baisse du pH est notamment due à la carbonatation du béton. Cette baisse déstabilise la couche protectrice de l'acier présente dans les bétons sains.

Par ailleurs, des ions tels que les chlorures peuvent corroder l'acier utilisé dans des constructions utilisant la pierre ou le stuc ou dans un matériau type béton, mortier, ciment ou similaire, même si le pH reste élevé.

Ces ions chlorures peuvent être introduits dans le matériau lors de l'application de sels de déverglaçage par exemple.

Pour redonner aux ouvrages en béton ou en pierre ainsi attaqués une meilleure durabilité, il est connu d'imprégner le matériau avec une composition de traitement comprenant des inhibiteurs, encore appelés inhibiteurs de corrosion.

Ces inhibiteurs agissent en modifiant la composition de la surface de l'acier, de façon à rendre les armatures plus résistantes à la corrosion.

Les inhibiteurs de corrosion sont généralement appliqués, sous la forme d'une solution aqueuse, à la surface du matériau, par exemple du béton, à traiter.

Les méthodes utilisées pour faire pénétrer des produits de traitement, tels que des inhibiteurs de corrosion, à l'intérieur d'un matériau à base de béton ou similaire présentent cependant des inconvénients.

Il est en effet nécessaire que les inhibiteurs de corrosion pénètrent suffisamment profondément dans le matériau, pour recouvrir les armatures situées en milieu corrosif.

Pour ce faire, la composition de traitement est généralement appliquée en plusieurs fois, habituellement de cinq à dix, pour obtenir la quantité d'inhibiteurs nécessaire dans le béton.

En outre, la profondeur de pénétration obtenue dépend notamment des conditions de température et d'humidité lors de l'application, ainsi que de la porosité du support.

Il est ainsi généralement nécessaire de sécher le support entre chaque application de la composition de traitement.

Le document US-5 556 915 décrit une émulsion destinée à traiter les structures en béton.

Il a également été proposé d'associer à des inhibiteurs de corrosion un agent chimique sous forme de gel, pour permettre aux inhibiteurs de se maintenir en place à l'intérieur d'une fissure ou d'un trou présent dans un ouvrage.

Le document US-5 782 961 décrit un procédé de traitement de structures en béton consistant à appliquer une composition de type gel contenant des substances hydrofuges, ceci afin de limiter la pénétration d'eau.

Ce procédé est destiné uniquement à des produits hydrofuges organiques.

L'invention a pour but de répondre à ces inconvénients, en proposant un procédé permettant la diffusion, en profondeur, de produits actifs à l'intérieur d'un matériau en béton, ciment, mortier, pierre, stuc ou similaire, en un nombre réduit d'applications et sans traitement particulier du matériau.

Le but principal de l'invention n'est pas de maintenir en place une composition dans, par exemple, une cavité, ou d'en faciliter l'application, mais d'en améliorer la performance grâce notamment à une meilleure pénétration et diffusion dans le matériau, permettant de réduire le nombre d'applications nécessaires pour obtenir le résultat visé ou d'obtenir un résultat supérieur.

A cet effet, la composition selon l'invention, pour le traitement d'un matériau à base de béton, ciment, mortier, pierre, stuc ou similaire, comprend un ou plusieurs produits actifs destinés à pénétrer profondément dans le matériau.

Selon l'invention, le procédé de traitement d'un matériau à base de béton, mortier, ciment, pierre, stuc ou similaire, comprend les étapes consistant à :
- mélanger un ou plusieurs produits actifs avec un gel ;
- appliquer une couche continue du mélange obtenu sur toute la surface du matériau à traiter.

Le procédé de traitement est caractérisé en ce que lesdits produits actifs comprennent des inhibiteurs de corrosion.

L'application du ou des produits actifs est réalisée sur le matériau à l'état sec ou humide.

L'application peut être réalisée au pinceau, au rouleau, par pulvérisation ou toute autre méthode d'application d'un gel sur une surface.

De préférence, le gel est appliqué sur le matériau à une concentration variant entre environ 50 g/m² et environ 5 000 g/m², par exemple entre environ 500 g/m² et environ 1 500 g/m².

L'application du gel peut être réalisée en une seule ou plusieurs étapes.

Le matériau n'est pas séché préalablement à l'application du gel.

Selon une caractéristique de l'invention, le mélange comprend un ou plusieurs composés aptes à augmenter la viscosité du mélange.

Les composés aptes à augmenter la viscosité comprennent les gommes, par exemple la gomme agar, la gomme arabique, la gomme adragante, la gomme de guar, ainsi que les dérivés et/ou mélanges de ces produits.

D'autres composés utilisables comprennent la cellulose, ses dérivés, par exemple la carboxyméthylcellulose, l'éthylcellulose, et/ou les mélanges de ces produits.

D'autres composés utilisables comprennent l'amidon, ses dérivés et/ou mélanges.

Il est également envisageable d'utiliser, à titre de composés aptes à augmenter la viscosité, les dextranes, ainsi que leurs dérivés et/ou mélanges.

On citera également comme composé utilisable l'agarose, ses dérivés et/ou mélanges.

Selon une forme d'exécution, la composition de l'invention comprend un seul composé apte à augmenter la viscosité.

En variante, la composition selon l'invention comprend un mélange de plusieurs composés aptes à augmenter la viscosité.

Les composés mentionnés ci-dessus sont couramment utilisés dans diverses industries chimiques et leur préparation ne sera donc pas décrite plus en détail ici.

Le choix de la nature et de la quantité du ou des composés augmentant la viscosité dépend notamment de la viscosité souhaitée pour le gel et de la nature des produits actifs incorporés dans celui-ci.

Ainsi, il est aisément concevable qu'un composé particulier permettra d'obtenir un gel de la viscosité souhaitée avec une quantité moindre qu'un autre composé.

D'une façon générale cependant, la composition selon l'invention comprend d'environ 0,1 % à environ 20 % en poids de composé apte à augmenter la viscosité, exprimé par rapport au poids total de la composition.

Selon une forme de réalisation, la composition selon l'invention comprend d'environ 0,5 % à environ 5 % en poids de composé apte à augmenter la viscosité, exprimé par rapport au poids total de la composition.

De même, la viscosité de la composition selon l'invention peut varier dans une large mesure, en fonction notamment de la nature des produits actifs, des caractéristiques du matériau dans lequel ils doivent pénétrer.

Une gamme de viscosité utilisable pour la composition selon l'invention varie d'environ 2 000 à environ 50 000 milliPascal-secondes.

Selon une forme d'exécution, la viscosité de la composition selon l'invention varie d'environ 10 000 à environ 30 000 milliPascal-secondes.

La composition selon l'invention peut comprendre un ou plusieurs produits actifs destinés à pénétrer profondément dans le matériau.

Ces produits actifs peuvent être de différentes natures.

Il peut s'agir par exemple de vernis.

Il peut s'agir également de produits destinés à réaliser un traitement spécifique du matériau. Un tel traitement peut consister par exemple en l'ajout de produits, par exemple du carbonate de sodium, augmentant la teneur du matériau en certains éléments métalliques, notamment certains cations.

D'autres produits actifs comprennent par exemple les produits hydrophobes, par exemple les siloxanes, destinés à limiter la pénétration de l'eau dans le matériau.

Il peut s'agir également de produits destinés à renforcer le matériau, tels que les silicates de lithium ou de sodium.

Les produits actifs peuvent également comprendre des agents inhibiteurs de corrosion.

De tels produits comprennent notamment les fluorophosphates, par exemple le monofluorophosphate de sodium, les nitrites, notamment de calcium ou de sodium, certains acides, par exemple l'acide polytartrique, les chélates de zinc, les phosphanates, les molybdates et les aminoalcools tels que la diméthyléthanolamine, les diéthanolamines ou les triéthanolamines, ainsi que les mélanges comprenant au moins l'un des produits mentionnés ci-dessus.

Selon une forme d'exécution, la composition de l'invention comprend un seul produit actif.

Selon une autre forme d'exécution, la composition de l'invention peut comprendre un mélange de plusieurs produits actifs dont l'action sur le matériau peut être identique ou différente.

On peut ainsi prévoir de mélanger dans une composition selon l'invention un produit de renforcement du matériau et un inhibiteur de corrosion.

L'intérêt de mélanger les produits de traitement avec un gel est le suivant :
- tout d'abord, le gel, du fait de sa viscosité, permet d'appliquer sur le matériau une couche très épaisse qui renferme, par conséquent, une grande quantité de produit actif ;
- de ce fait, chaque unité de surface du matériau à traiter est en contact avec une importante quantité de produit actif ;
- grâce à la forte épaisseur de la couche de traitement formée par le gel, le produit de traitement contenu dans ce gel, est protégé contre tout risque d'évaporation trop rapide dans l'air, ce qui permet de prolonger là durée de contact du produit de traitement avec le matériau à traiter.

Par conséquent, grâce au gel qui contient le produit de traitement, on augmente la quantité de produit actif par unité de surface du matériau à traiter, ainsi que la durée du contact entre le produit et le matériau à traiter, ce qui accroît considérablement l'efficacité du produit de traitement.

Les émulsions décrites par exemple dans le brevet US-5 556 915 ne peuvent avoir ni la consistance, ni la viscosité d'un gel.

On ne peut donc appliquer une émulsion sous forme de couche épaisse sur la surface du matériau à traiter.

Par conséquent, une couche mince d'émulsion ne peut renfermer une importante quantité de produit de traitement par unité de surface du matériau à traiter.

De plus, dans le cas du gel utilisé dans le procédé selon l'invention, seul le produit de traitement pénètre dans le matériau à traiter, et le gel, du fait de sa viscosité importante, reste en surface et forme sur celle-ci après séchage, un résidu qu'il faut éliminer.

Autrement dit, le gel a une aptitude à retenir dans un premier temps une grande quantité de produit de traitement, puis dans un second temps de libérer ce dernier pour qu'il diffuse dans le matériau.

Au contraire, dans le cas d'une émulsion, la totalité de celle-ci pénètre dans le matériau en même temps que le produit de traitement.

En conséquence, l'application sur le matériau à traiter d'une émulsion renfermant un produit de traitement ne peut en aucun cas présenter les avantages procurés par un gel renfermant le produit de traitement.

L'invention vise également à protéger un procédé de diffusion d'un ou plusieurs produits actifs à l'intérieur d'un matériau à base de béton, ciment, mortier, pierre, stuc ou similaire.

Le procédé selon l'invention, de diffusion profonde d'un ou plusieurs produits actifs à l'intérieur d'un matériau à base de béton, ciment, mortier, pierre, stuc ou similaire, comprend les étapes consistant à :
- former un gel d'un ou plusieurs produits actifs dans une masse viscoélastique, le dit gel étant tel que décrit précédemment ;
- appliquer le gel à la surface du matériau.

Selon le procédé de l'invention, le ou les produits actifs peuvent être appliqués sur le matériau à l'état sec ou humide.

Il n'est donc pas nécessaire que le matériau subisse, préalablement à l'application du gel, une étape de séchage.

Le gel peut être appliqué à la surface du matériau par différentes méthodes. On citera par exemple une application au pinceau, au rouleau, une application par pulvérisation ou toute autre méthode d'application d'un gel sur une surface.

Le gel est généralement appliqué sur le matériau à une concentration variant entre environ 50 g/m² et environ 5 000 g/m².

Selon une forme d'exécution, le gel est appliqué sur le matériau à une concentration variant entre environ 500 g/m² et environ 1 500 g/m².

L'invention vise enfin l'utilisation d'un gel en tant que vecteur pour la diffusion profonde d'un ou plusieurs produits actifs dans un matériau à base de béton, mortier, ciment, pierre, stuc ou similaire.

Selon l'invention, le gel comprend un ou plusieurs composés aptes à augmenter la viscosité, par exemple de la cellulose, de l'aragose, de l'amidon, un dextrane, une gomme, ainsi que les dérivés et/ou mélanges de ces produits.

Les produits actifs comprennent par exemple les vernis, additifs, produits de renforcement, inhibiteurs de corrosion, produits hydrophobes.

L'invention sera mieux comprise dans la description qui suit, faite en référence à la figure annexée.

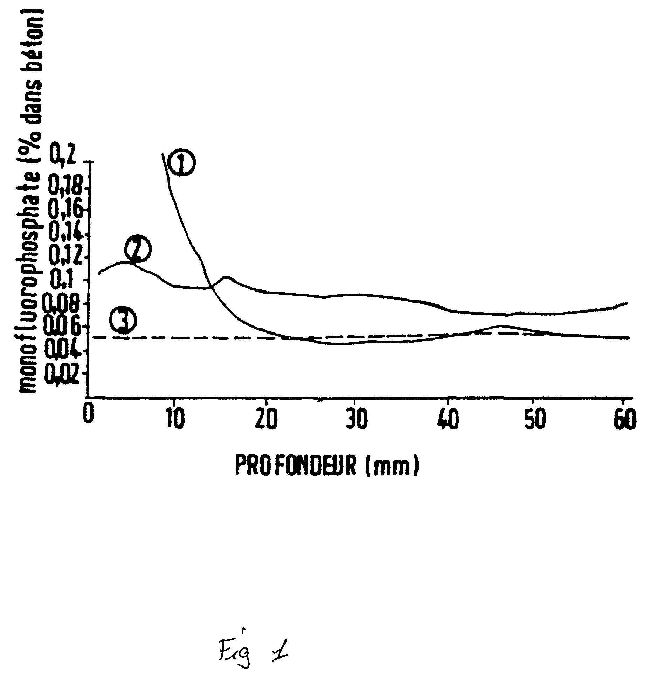

La figure 1 est une courbe représentant la concentration en produit actif diffusé dans un béton en fonction de la profondeur, en utilisant le gel de l'exemple 1.

Sur la figure 1, la courbe n°1 met en évidence les résultats obtenus avec une composition de traitement conventionnelle.

La courbe n°2 met en évidence les résultats obtenus avec une composition de l'invention, et la courbe n°3 met en évidence la valeur minimale admissible en produit actif dans le béton.

### Exemple 1

Une solution aqueuse à 20 % de monofluorophosphate est gélifiée en ajoutant sous agitation et à température ambiante 2,5 % en poids de carboxyméthylcellulose en poudre (CMC) d'une viscosité de 20 000 milliPascal-secondes. Ce gel est appliqué au pinceau, au rouleau, pulvérisé ou appliqué par toute autre méthode d'application d'un gel sur une surface, à raison de 1 500 g/m², sur un mur de culée d'un viaduc fortement contaminé par des chlorures.

Le gel pénètre entièrement en environ six heures, laissant un léger résidu de CMC facilement lavable à l'eau.

Sur une surface avoisinante, une application par pulvérisation de la même solution aqueuse de monofluorophosphate - sans CMC - est réalisée, de façon à obtenir une quantité appliquée équivalente à celle du gel. Pour ce faire, le monofluorophosphate est pulvérisé à 15 reprises durant une période totale de 8 heures.

Deux jours après les traitements, des carottes de béton sont prélevées et analysées pour définir le profil de concentration en monofluorophosphate en fonction de la profondeur. Les résultats sont montrés sur la figure 1.

La figure 1 montre que non seulement l'utilisation du gel permet d'accroître la pénétration du monofluorophosphate, mais que les résultats sont fortement améliorés.

La teneur en monofluorophosphate est toujours suffisante à 60 mm dans le cas du gel, alors que l'application classique par une solution n'a pas permis de dépasser une profondeur utile de 20 mm.

### Exemple 2

Dans un litre d'eau, 60 grammes de colle amidon et 1 gramme de poly électrolyte Praestol sont dispersés sous forte agitation jusqu'à obtention d'une masse homogène. En maintenant l'agitation, 200 grammes de monofluorophosphate sont ensuite introduits ainsi que 0,1 gramme de Triton X100 pour augmenter la mouillabilité du gel.

Le gel obtenu est appliqué sur la voûte d'un tunnel, à raison de 1 500 grammes par m². Au bout de 3 jours environ, la surface du béton ne montre qu'un résidu sec d'amidon.

La mesure de la pénétration du monofluorophosphate dans le béton est réalisée sur une carotte de 50 mm de diamètre et montre une pénétration de 60 mm environ.

Une application classique par pulvérisation répétée d'une solution aqueuse de monofluorophosphate ne montre, à concentration équivalente, qu'une pénétration de 30 mm environ.

### Exemple 3

Un gel est préparé en mélangeant sous forte agitation 30 g par litre d'eau de carboxyméthylcellulose, d'une viscosité de 80 000 milliPascal-secondes. 200 g par litre d'eau de nitrite sont ensuite introduits sous agitation, jusqu'à obtention d'un gel homogène.

Le gel obtenu est correctement dispersé et est appliqué sur des surfaces de béton verticales et surplombantes pour vérifier la tenue. Plus de 1 500 g par m² de ce gel ont pu être appliqués sans coulures. Le séchage et la pénétration du gel dans le béton se déroulent de la même façon qu'avec un gel au monofluorophosphate.

### Exemple 4

Un gel est préparé de la même façon que dans l'exemple 3 ci-dessus, mais en remplaçant le nitrite par une quantité identique de 2-Diméthylaminoéthanol.

Un gel homogène et bien dispersé est obtenu et peut être appliqué sur des parois de béton de la même façon que les gels décrits aux exemples précédents.

## Revendications

1. Procédé de traitement d'un matériau à base de béton, mortier, ciment, pierre, stuc ou similaire, comprenant les étapes consistant à :
- mélanger un ou plusieurs produits actifs avec un gel ;
- appliquer une couche continue du mélange obtenu sur toute la surface du matériau à traiter,
**caractérisé en ce que** lesdits produits actifs comprennent des inhibiteurs de corrosion.

2. Procédé selon la revendication 1, **caractérisé en ce que** les inhibiteurs de corrosion comprennent les fluorophosphates, par exemple le monofluophosphate de sodium, les nitrites, notamment de calcium ou de sodium, certains acides, par exemple d'acide polytartrique, les chélates de zinc, les phosphonates, les molybdates et les aminoalcools tels que la diméthyléthanolamine, les diéthanolamines ou les triéthanolamines, ainsi que les mélanges comprenant au moins l'un des produits ci-dessus.

3. Procédé selon la revendication 1 ou 2, **caractérisé en ce que** l'application est réalisée au pinceau, au rouleau, par pulvérisation ou toute autre méthode d'application d'un gel sur une surface.

4. Procédé selon l'une quelconque des revendications 1 à 3, **caractérisé en ce que** le- gel est appliqué sur le matériau à une concentration variant entre environ 50 g/m² et environ 5 000 g/m², par exemple entre environ 500 g/m² et environ 1 500 g/m².

5. Procédé selon l'une quelconque des revendications 1 à 4, **caractérisé en ce que** l'application du gel est réalisée en une seule ou plusieurs étapes.

6. Procédé selon l'une des revendications 1 à 5, **caractérisé en ce que** le mélange comprend un ou plusieurs composés aptes à augmenter la viscosité du mélange.

7. Procédé selon la revendication 6, **caractérisé en ce que** les composés aptes à augmenter la viscosité comprennent les gommes, par exemple la gomme agar, la gomme adragante, la gomme de guar, ainsi que les dérivés et/ou mélanges de ces produits.

8. Procédé selon la revendication 6, **caractérisé en ce que** les composés aptes à augmenter la viscosité comprennent la cellulose, ses dérivés, par exemple la carboxyméthylcellulose, l'éthylcellulose, et/ou les mélanges de ces produits.

9. Procédé selon la revendication 6, **caractérisé en ce que** les composés aptes à augmenter la viscosité comprennent l'amidon, ses dérivés et/ou mélanges.

10. Procédé selon la revendication 6, **caractérisé en ce que** les composés aptes à augmenter la viscosité comprennent les dextranes, leurs dérivés et/ou mélanges.

11. Procédé selon la revendication 6, **caractérisé en ce que** les composés aptes à augmenter la viscosité comprennent l'agarose, ses dérivés et/ou mélanges.

12. Procédé selon l'une quelconque des revendications 6 à 11, **caractérisé en ce que** le mélange comprend plusieurs composés aptes à augmenter la viscosité.

13. Procédé selon l'une quelconque des revendications 1 à 12, **caractérisé en ce que** le mélange comprend environ 0,1 % à. environ 20 % en poids de composé apte à augmenter la viscosité, exprimé par rapport au poids total du mélange, par exemple d'environ 0,5 % à environ 5 %.

14. Procédé selon l'une quelconque des revendications 1 à 13, **caractérisé en ce que** le mélange possède une viscosité variant entre environ 2 000 milliPascal-secondes et environ 50 000 milliPascal-secondes, par exemple entre environ 10 000 et environ 30 000 milliPascal-secondes

## Claims

1. A method of treating a material based on concrete, mortar, cement, stone, stucco or the like, comprising the steps consisting of:
- mixing one or more active substances with a gel;
- applying a continuous coat of the mixture obtained over the entire surface of the material to be treated,
**characterised in that** the said active substances comprise corrosion inhibitors.

2. A method according to Claim 1, **characterised in that** the corrosion inhibitors comprise fluorophosphates, for example sodium monofluorophosphate, nitrites, in particular calcium and sodium, certain acids, for example polytartric acid, zinc chelates, phosphonates, molybdates and amino alcohols such as dimethylethanolamine, diethanolamines or triethanolamines, as well as mixtures comprising at least one of the above substances.

3. A method according to Claim 1 or 2, **characterised in that** the application is carried out with a brush or roller, by spraying or any other method of applying a gel to a surface.

4. A method according to any one of Claims 1 to 3, **characterised in that** the gel is applied to the material at a concentration varying between approximately 50 g/m² and approximately 5000 g/m², for example between approximately 500 g/m² and approximately 1500 g/m².

5. A method according to any one of Claims 1 to 4, **characterised in that** the application of the gel is carried out in one or more steps.

6. A method according to one of Claims 1 to 5, **characterised in that** the mixture comprises one or more compounds able to increase the viscosity of the mixture.

7. A method according to Claim 6, **characterised in that** the compounds able to increase the viscosity comprise gums, for example gum agar, gum tragacanth or guar gum, as well as derivatives and/or mixtures of these substances.

8. A method according to Claim 6, **characterised in that** the compounds able to increase viscosity comprise cellulose, derivatives thereof, for example carboxymethylcellulose or ethylcellulose, and/or mixtures of these substances.

9. A method according to Claim 6, **characterised in that** the compounds able to increase viscosity comprise starch and derivatives and/or mixtures thereof.

10. A method according to Claim 6, **characterised in that** the compounds able to increase viscosity comprise dextrans and derivatives and/or mixtures thereof.

11. A method according to Claim 6, **characterised in that** the compounds able to increase viscosity comprise agarose and derivatives and/or mixtures thereof.

12. A method according to any one of Claims 6 to 11, **characterised in that** the mixture comprises several compounds able to increase viscosity.

13. A method according to any one of Claims 1 to 12, **characterised in that** the mixture comprises approximately 0.1% to approximately 20% by weight of compound able to increase viscosity, expressed with respect to the total weight of the mixture, for example from approximately 0.5% to approximately 5%.

14. A method according to any one of Claims 1 to 13, **characterised in that** the mixture has a viscosity varying between approximately 2000 millipascal seconds and approximately 50,000 millipascal seconds, for example between approximately 10,000 and approximately 30,000 millipascal seconds.

## Patentansprüche

1. Behandlungsverfahren eines Materials auf Basis von Beton, Mörtel, Zement, Stein, Stuck oder dergleichen, mit den folgenden Etappen:
- Vermischen eines oder mehrerer aktiven Produkte mit einem Gel;
- Auftragen einer flächigen Schicht der erhaltenen Mischung auf die gesamte Oberfläche des zu behandelnden Materials,
**dadurch gekennzeichnet, dass** die besagten aktiven Produkte Korrosionshemmstoffe enthalten.

2. Verfahren nach Anspruch 1, **dadurch gekennzeichnet, dass** die Korrosionshemmstoffe Fluorphosphate enthalten, beispielsweise Natriummonofluorphosphat, Nitrite, insbesondere Kalzium- oder Natriumnitrite, bestimmte Säuren, beispielsweise Polyweinsäure, Zinkchelate, Phosphonate, Molybdate und Aminalkohole wie Dimethylethanolamin, Diethanolamine oder triethanolamine, sowie Mischungen, die zumindest eines der oben genannten Produkte enthalten.

3. Verfahren nach Anspruch 1 oder 2, **dadurch gekennzeichnet, dass** das Auftragen mittels eines Pinsels, einer Rolle, durch Besprühen oder anhand einer anderen Auftragsmethode eines Gels auf eine Oberfläche erfolgt.

4. Verfahren nach einem der Ansprüche 1 bis 3, **dadurch gekennzeichnet, dass** das Gel in einer Konzentration zwischen etwa 50 g/m² und etwa 5 000 g/m², beispielsweise zwischen etwa 500 g/m² und etwa 1 500 g/m² aufgetragen wird.

5. Verfahren nach einem der Ansprüche 1 bis 4, **dadurch gekennzeichnet, dass** das Auftragen des Gels in einem oder mehreren Schritten erfolgt.

6. Verfahren nach einem der Ansprüche 1 bis 5, **dadurch gekennzeichnet, dass** die Mischung ein oder mehrere Bestandteile enthält, die die Viskosität der Mischung erhöhen können.

7. Verfahren nach Anspruch 6, **dadurch gekennzeichnet, dass** die zur Erhöhung der Viskosität geeigneten Bestandteile Gummi enthalten, beispielsweise Agargummi, Tragantgummi, Guargummi, sowie Derivate und/oder Mischungen dieser Produkte.

8. Verfahren nach Anspruch 6, **dadurch gekennzeichnet, dass** die zur Erhöhung der Viskosität geeigneten Bestandteile Cellulose, ihre Derivate, beispielsweise Carboxymethylcellulose, Ethylcellulose, und/oder Mischungen dieser Produkte enthalten.

9. Verfahren nach Anspruch 6, **dadurch gekennzeichnet, dass** die zur Erhöhung der Viskosität geeigneten Bestandteile Stärke, ihre Derivate und/oder Mischungen enthalten.

10. Verfahren nach Anspruch 6, **dadurch gekennzeichnet, dass** die zur Erhöhung der Viskosität geeigneten Bestandteile Dextrane, ihre Derivate und/oder Mischungen enthalten.

11. Verfahren nach Anspruch 6, **dadurch gekennzeichnet, dass** die zur Erhöhung der Viskosität geeigneten Bestandteile Agarose, ihre Derivate und/oder Mischungen enthalten.

12. Verfahren nach einem der Ansprüche 6 bis 11, **dadurch gekennzeichnet, dass** die Mischung mehrere Bestandteile enthält, die die Viskosität erhöhen können.

13. Verfahren nach einem der Ansprüche 1 bis 12, **dadurch gekennzeichnet, dass** die Mischung etwa 0,1 Gew.-% bis etwa 20 Gew.-% Bestanteile enthält, die die Viskosität erhöhen können, ausgedrückt in Bezug auf das Gesamtgewicht der Mischung, beispielsweise etwa 0,5% bis etwa 5%.

14. Verfahren nach einem der Ansprüche 1 bis 13, **dadurch gekennzeichnet, dass** die Mischung eine Viskosität zwischen etwa 2 000 Millipascal-Sekunden und etwa 50 000 Millipascal-Sekunden, beispielsweise zwischen etwa 10 000 und etwa 30 000 Millipascal-Sekunden aufweist.
